# EUROPEAN PATENT SPECIFICATION

(11) **EP 3 098 525 B1**
(45) Date of publication and mention of the grant of the patent: **01.07.2020**
(21) Application number: 16171405.0
(22) Date of filing: 25.05.2016
(51) Int. Cl.: F24F 11/30, F24F 3/16, G06K 9/00

(54) **AIR PURIFICATION METHOD AND APPARATUS**
LUFTREINIGUNGSVERFAHREN UND VORRICHTUNG
PROCÉDÉ ET APPAREIL DE PURIFICATION D'AIR

(30) Priority: 29.05.2015 CN 201510290860
(43) Date of publication of application: 30.11.2016
(73) Proprietor: Xiaomi Inc., Beijing 100085 (CN)
(72) Inventor: WU, Ke, Beijing 100085 (CN); LIU, Xinyu, Beijing 100085 (CN); LIU, Huayijun, Beijing 100085 (CN)
(74) Representative: Cabinet Beau de Loménie

(56) References cited:
- WO-A1-2014/207629
- CN-A- 104 048 387
- CN-A- 104 456 831
- CN-A- 104 536 473
- JP-A- H11 166 754

## Description

### TECHNICAL FIELD

The present disclosure generally relates to the field of computer technologies, and more particularly, to an air purification method and apparatus.

### BACKGROUND

With the constant development of electronic technologies, household appliances become diversified, and more and more household appliances gain wide promotion and application. Air purifiers have now become a kind of commonly-used household appliance, which are generally used to clear or remove pollutants in the air, for example, PM2.5, dust, odor, decoration pollutions such as formaldehyde, bacteria, pollen and the like.

When plants capable of blooming are cultivated in a house, pollen of the blooming plants generally spreads in the air. However, the pollen of some plants may cause allergic symptoms to people, such that a user needs to use the air purifier in good time to remove the pollen of these plants from the air. Usually, when seeing the blooming of flowers or smelling the odor of the blooming flowers, the user may enable the air purifier to purify the air, to remove the pollen contained in the air.

During implementation of the present disclosure, the present inventors have identified that at least the following defects exist in the related art:
Based on the above process, when the user sees the blooming of flowers or smells the odor of the blooming flowers, it is likely that a large amount of pollen has been spreading in the air, thereby increasing the probability of adverse effects caused by the pollen. Documents WO 2014/207629 and CN 104 048 387 disclose known air purification devices.

Document JP H11 166754, which discloses the features of the preamble of claim 1, describes a method in which a pollen content is detected and if the detected value is high an purification device is activated.

### SUMMARY

To overcome the defects existent in the related art, the present disclosure provides an air purification method and apparatus as defined in the independent claims. Preferred embodiments of the invention are defined in the dependent claims. The following technical solutions are employed.

According to a first aspect of embodiments of the present disclosure, an air purification method is provided in accordance with claim 1.

In a particular embodiment, acquiring an image of the target detection region includes:
acquiring the image of the target detection region captured by the target air purification device and/or another device via an image capturing component.

In a particular embodiment, the method further includes:
determining, according to the image of the target detection region and a prestored second reference plant image of various plants, at least one plant contained in the target detection region; and
controlling the target air purification device to adjust an environmental temperature and an environmental humidity according to prestored growth temperature information and growth humidity information corresponding to the at least one plant.

In a particular embodiment, acquiring plant information of the plant contained in a target detection region includes: acquiring air composition information of the target detection region; and
controlling a target air purification device to enable an air purification function if it is judged, according to the plant information of the plant contained in the target detection region and predetermined reference plant information of an allergy-causing plant, that the target detection region contains the allergy-causing plant and that the allergy-causing plant is in a blooming state includes:
controlling the target air purification device to enable the air purification function if it is judged, according to the air composition information of the target detection region and predetermined pollen composition information of the allergy-causing plant, that the air in the target detection region contains pollen of the allergy-causing plant.

According to a second aspect of embodiments of the present disclosure, an air purification apparatus is provided in accordance with claim 4.

In a particular embodiment, the acquiring module is further configured to acquire the image of the target detection region captured by the target air purification device and/or another device via an image capturing component.

In a particular embodiment, the apparatus further includes:
a determining module, configured to determine, according to the image of the target detection region and a prestored second reference plant image of various plants, at least one plant contained in the target detection region; and
the control module is further configured to control the target air purification device to adjust an environmental temperature and an environmental humidity according to prestored growth temperature information and growth humidity information corresponding to the at least one plant.

In a particular embodiment, the acquiring module is further configured to acquire air composition information of the target detection region; and
the control module is further configured to control the target air purification device to enable the air purification function if it is judged, according to the air composition information of the target detection region and predetermined pollen composition information of the allergy-causing plant, that the air in the target detection region contains pollen of the allergy-causing plant.

According to a third aspect of embodiments of the present disclosure, an apparatus for use in air purification is provided in accordance with claim 7.

In one particular embodiment, the steps of the method as defined above are determined by computer program instructions.

Consequently, according to a fourth aspect, the invention is also directed to a computer program for executing the steps of a method as defined above when this program is executed by a computer.

This program can use any programming language and take the form of source code, object code or a code intermediate between source code and object code, such as a partially compiled form, or any other desirable form.

The invention is also directed to a computer-readable recording medium containing instructions of a computer program as described above.

The recording medium can be any entity or device capable of storing the program. For example, the recording medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

The technical solutions provided in the embodiments of the present disclosure may achieve the following beneficial effects:
In the embodiments of the present disclosure, plant information of a plant contained in a target detection region is acquired, and a target air purification device is controlled to enable an air purification function thereof if it is judged, according to the plant information of the plant contained in the target detection region and predetermined reference plant information of the allergy-causing plant, that the target detection region contains the allergy-causing plant and that the allergy-causing plant is in the blooming state. In this way, when the allergy-causing plant is blooming, the air purification device is capable of quickly detecting the blooming of the allergy-causing plant and clearing pollen in the air, thereby lowering the probability of adverse effects caused by the pollen.

It shall be appreciated that the above general description and the detailed description hereinafter are only illustrative and interpretative, but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the specification, serve to explain the principles of the present disclosure. Among the drawings:
Fig. 1 is a flowchart illustrating an air purification method according to an example embodiment of the present disclosure;
Fig. 2 is a schematic diagram illustrating a network architecture according to an example embodiment of the present disclosure;
Fig. 3 is a schematic diagram illustrating an image captured during determination of a target detection region according to an example embodiment of the present disclosure;
Fig. 4 is a schematic diagram illustrating image processing according to an example embodiment of the present disclosure;
Fig. 5 is a schematic diagram illustrating image processing according to an example embodiment of the present disclosure;
Fig. 6 is a schematic structural diagram illustrating an air purification apparatus according to an example embodiment of the present disclosure;
Fig. 7 is a schematic structural diagram illustrating an air purification apparatus according to an example embodiment of the present disclosure; and
Fig. 8 is a schematic structural diagram illustrating an apparatus for use in air purification according to an example embodiment of the present disclosure.

The above drawings are used for illustrating the embodiments of the present disclosure given below, and more details will be given hereinafter. These drawings and textual descriptions are not intended to limit the scope defined in the present disclosure in any way, but intended to describe the inventive concept of the present disclosure, through specific embodiments, for a person skilled in the art.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the present disclosure. Instead, they are merely examples of apparatuses and methods consistent with aspects related to the present disclosure as recited in the appended claims.

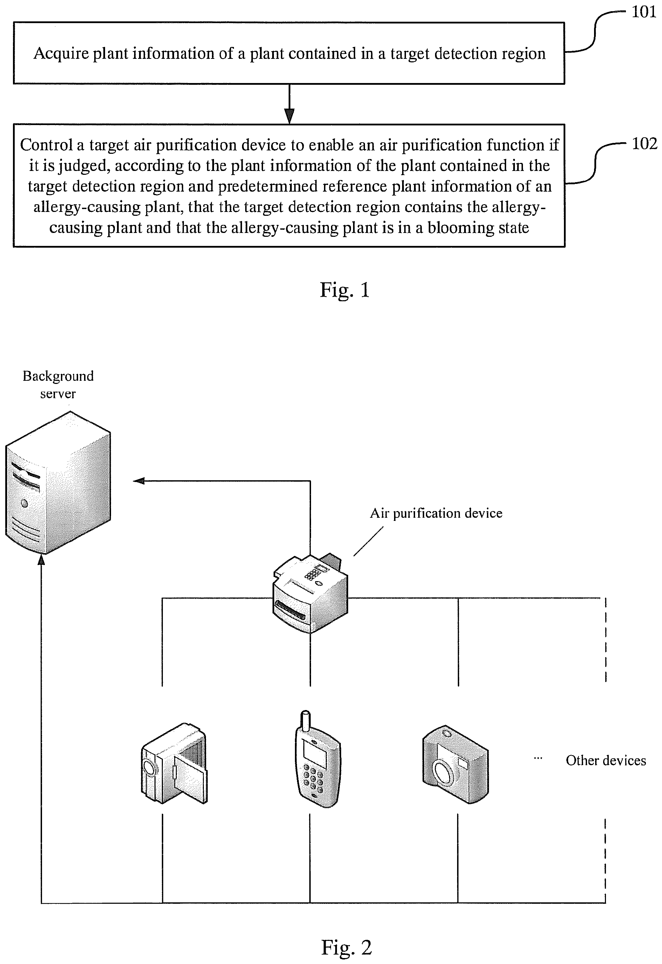

An embodiment of the present disclosure provides an air purification method. As illustrated in Fig. 1, the processing procedure in the method may include the following steps.

In step 101, plant information of a plant contained in a target detection region is acquired.

In step 102, a target air purification device is controlled to enable an air purification function if it is judged, according to the plant information of a plant contained in the target detection region and predetermined reference plant information of an allergy-causing plant, that the target detection region contains the allergy-causing plant and the allergy-causing plant is in a blooming state.

In the embodiment of the present disclosure, plant information of a plant contained in a target detection region is acquired, and a target air purification device is controlled to enable an air purification function thereof if it is judged, according to the plant information of the plant contained in the target detection region and predetermined reference plant information of the allergy-causing plant, that the target detection region contains the allergy-causing plant and the allergy-causing plant is in the blooming state. In this way, when the allergy-causing plant is blooming, the air purification device is capable of quickly detecting the blooming of the allergy-causing plant and clearing pollen in the air, thereby lowering the probability of adverse effects caused by the pollen.

An embodiment of the present disclosure provides an air purification method. The method may be applied in an air purification device (which may be referred to as a target air purification device) or a background server corresponding to the air purification device, wherein the air purification device may be a smart air purifier. The target air purification device may be provided with a purifier, a processor, and a memory. The purifier may be configured to purify the air, the processor may be configured to control operation of the purifier, and the memory may be configured to store data needed during the following processing and data generated therefrom. The air purification device may be further provided with such input and output devices as a screen, a keyboard, an image capturing component and the like. The screen may be configured to display information and may be a touch-controllable screen, the keyboard may be configured for a user to input information, and the image capturing component, such as a camera or the like, may be configured to acquire an image. The background server corresponding to the air purification device may control the target air purification device, and may store a large amount of information, for example, reference plant information, user information and the like. The background server may include a processor and a memory. The processor may be configured to perform information matching, device control and the like in the following procedures, and the memory may be configured to store data needed during the following processing and data generated therefrom. The method processes in this embodiment may be performed by the background server. In this embodiment, the technical solution is described in detail by using a background server as the method execution body, and other similar situations are thus not described herein any further.

The processing procedure as illustrated in Fig. 1 is described in detail hereinafter with reference to specific embodiments.

In step 101, plant information of a plant contained in a target detection region is acquired.

The target detection region may be a region where a plant cultivated by a user in his or her home is located. The plant information may be information used for determining plant cultivation or growth condition of the target detection region, and may be image or air composition information or the like.

In some embodiments, the background server may send a request for acquiring plant information to the air purification device. Upon receiving the request, the air purification device may determine the target detection region, and acquire plant information of the plant contained in this region, and thus send the plant information to the background server. In addition, the background server may also send the request for acquiring plant information to other devices (for example, a smart camera or the like) bound to the air purification device, and the other devices may acquire the corresponding plant information and send the acquired information to the server. Alternatively, the air purification device or the other devices, in the standby state, may automatically acquire the plant information of the target detection region based on a specific period, and then may send in real time the acquired plant information to the background server.

Based on different plant information, step 101 may include various processing manners. Several processing manners are given hereafter, wherein only manner 1 is according to the invention.

Manner 1: Image of the target detection region is acquired.

In some embodiments, the background server may send a request for acquiring an image to the air purification device. Upon receiving the request, the target air purification device may enable the image capturing component to capture an image of the target detection region, and thus send the image to the background server. Alternatively, the background server may also send the request for acquiring an image to other devices (for example, a smart camera or the like) bound to the air purification device, and the other devices may acquire the corresponding image and send the acquired information to the server. Alternatively, the air purification device or the other devices, in the standby state, may automatically acquire the image of the target detection region based on a specific period, and then may send in real time the acquired image to the background server.

Optionally, the image of the target detection region may be acquired by any device having an image capturing capability, and the corresponding process is as follows: acquiring an image of the target detection region captured by the target air purification device and/or the other devices via an image capturing component thereof.

The other devices may be any devices equipped with an image capturing component and having an image capturing capability.

In some embodiments, the image of the target detection region captured by the other devices via the image capturing components thereof may be transmitted to the target air purification device in various data transmission manners, and thus the target air purification device may send the image to the background server. Alternatively, the other devices may also directly send the image to the background server, and the background server stores a binding relationship between the air purification device and the other devices. After the image is received, the background server may know that the image is image of a target detection region nearby the air purification device. The corresponding network framework may be as illustrated in Fig. 2. The background server may only acquire one piece of image of the target detection region. Alternatively, the background server may also acquire multiple pieces of image of the target detection region by using different devices (the air purification device and the other devices), wherein each piece of image is acquired via image capturing at different angles. As such, the accuracy of subsequent image analysis may be improved.

Manner 2 (illustrative only): Air composition information of the target detection region is acquired.

The air composition information may be chemical property information (for example, chemical composition and the like) or physical property information (for example, particle diameter and the like) of substances contained in the air.

The background server may send a request for acquiring air composition information to the target air purification device. Upon receiving the request, the target air purification device may enable an air detector to detect the air composition information of this region, and thus send the air composition information to the background server. Alternatively, the air purification device, in the standby state, may automatically acquire the air composition information of the target detection region based on a specific period, and then may send in real time the acquired air composition information to the background server.

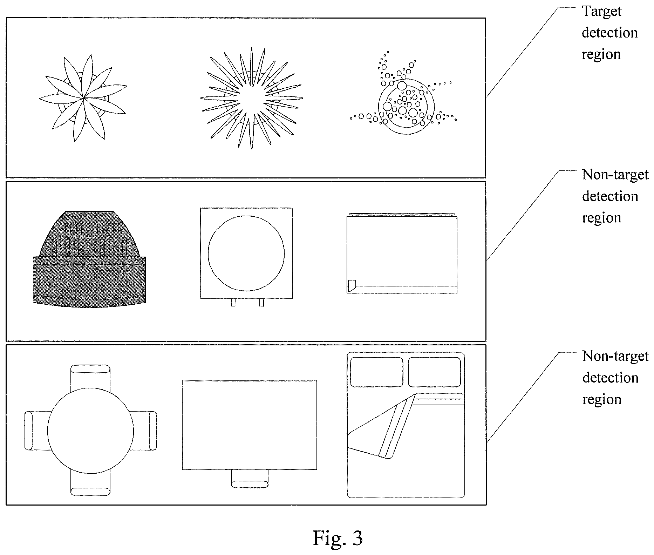

The above target detection region may be defined by a user, and the user may place the air purification device in the target detection region, and may also cause the image capturing component of the air purification device to target at the target detection region. The background server may determine the target detection region prior to acquiring the plant information. Correspondingly, the background server sends a region determining request to the air purification device. Upon receiving the region determining request, the air purification device may enable the image capturing component thereof to capture images for all the photographable regions, and send the captured images to the background server. The background server may determine, according to contents of the images, a region containing the plant as a target detection region. The captured images may be as illustrated in Fig. 3. Afterwards, the background server may send a determination result to the air purification device, and thus the air purification device may determine a target detection region and control the image capturing component to face towards the target detection region. The above process of determining the target detection region may also be performed by the air purification device itself.

In step 102, a target air purification device is controlled to enable an air purification function if it is judged, according to the plant information of the plant contained in the target detection region and predetermined reference plant information of an allergy-causing plant, that the target detection region contains the allergy-causing plant and the allergy-causing plant is in a blooming state.

The reference plant information may be reference information used for judging whether a plant is existent in the target detection region and in a blooming state, for example, the reference plant information may be reference plant image, reference pollen composition information and the like.

In some embodiments, the background server may store reference plant information of various plants, and correspondingly store identity information of the plants; and the reference plant information may be acquired via import by the technical persons or via network crawling. The background server may store personal account information of a user, and the personal account information of the user may include identity information of an allergy-causing plant causing an allergic condition to the user. The identity information of the allergy-causing plant may be input by the user in the air purification device, and is then transmitted by the air purification device to the background server; or may be acquired from an electronic medical record of the user by inquiring the electronic medical record in the background server. Upon receiving the plant information of the plant contained in the target detection region sent by the air purification device or the other devices, the background server may determine an account bound to the air purification device or other devices, and acquire corresponding personal account information. Hence, the background server acquires identity information of the allergy-causing plant from the personal account information, acquires corresponding reference plant information of the allergy-causing plant stored locally based on the identity information of the allergy-causing plant, compares the reference plant information with the acquired plant information of the plant contained in the target detection region, and judges, according the comparison result, whether an allergy-causing plant in a blooming state is existent in the target detection region. If it is judged that the target detection region contains an allergy-causing plant that is in the blooming state, the background server may send an air purification request to the target air purification device, to control the target air purification device to enable the air purification function thereof. Upon receiving the air purification request, the target air purification device may enable the air purification function thereof to purify the air.

With respect to the two processing manners in step 101, the processes in step 102 may be correspondingly different, and may be as follows.

With respect to the above manner 1, step 102 includes the following process: controlling the target air purification device to enable the air purification function if it is judged, according to the image of the target detection region and a predetermined first reference plant image of the allergy-causing plant, that the target detection region contains the allergy-causing plant and the allergy-causing plant is in the blooming state; wherein, the first reference plant image is image of the allergy-causing plant in the blooming state.

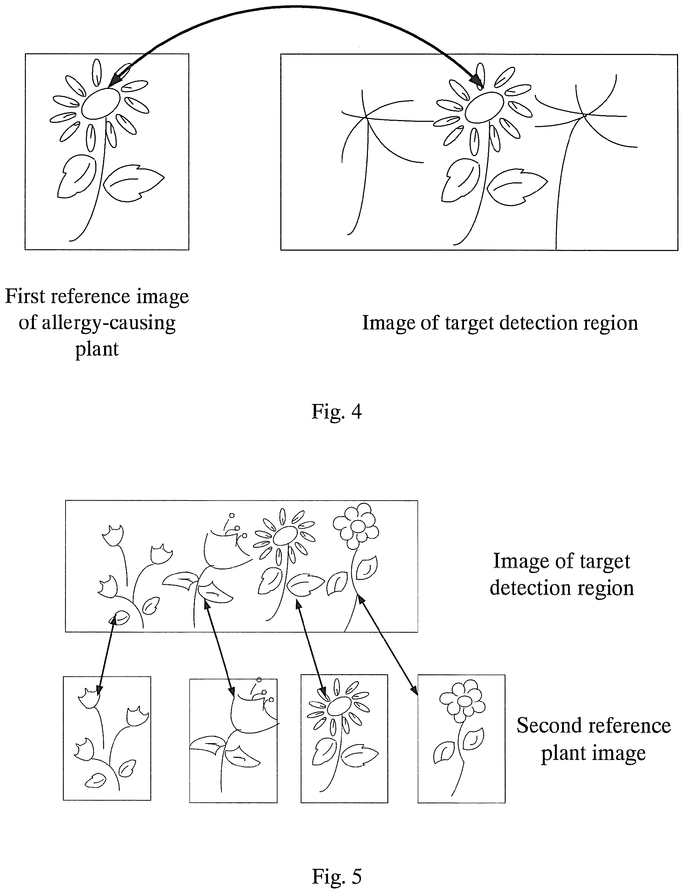

In some embodiments, the background server may store image of various plants in a blooming state, and correspondingly store identity information of these plants. Upon receiving the image of the target detection region sent by the air purification device or the other devices, the background server may determine an account bound to the air purification device or the other devices, and acquire corresponding personal account information. Hence the background server acquires identity information of the allergy-causing plant from the personal account information, acquires corresponding image of the allergy-causing plant in the blooming state stored locally based on the identity information of the allergy-causing plant, and searches for an image region similar to the image of the allergy-causing plant in the blooming state from the acquired image of the target detection region. A matching-based search may be carried out based on appearance and profile information and color combination information in the image of the allergy-causing plant in the blooming state. As illustrated in Fig. 4, when an image region in the acquired image is similar to the stored image of the allergy-causing plant in the blooming state to some extent, it may be judged that an allergy-causing plant in the blooming state is existent in the target detection region, and afterwards the background server may send an air purification request to the air purification device, to control the air purification device to enable the air purification function thereof. Upon receiving the air purification request, the air purification device may enable the air purification function thereof to purify the air.

With respect to the above manner 2, step 102 may include the following process: controlling the target air purification device to enable the air purification function if it is judged, according to the air composition information of the target detection region and predetermined pollen composition information of the allergy-causing plant, that the air in the target detection region contains pollen of the allergy-causing plant.

The background server may store pollen composition information of various plants, and correspondingly store identity information of these plants. The pollen composition information may be chemical property information (for example, chemical composition and the like) or physical property information (for example, particle diameter and the like) of the pollen. Upon receiving the air composition information of the target detection region sent by the air purification device, the background server may determine an account bound to the air purification device, and acquire corresponding personal account information. Hence the background server acquires identity information of the allergy-causing plant from the personal account information, acquires corresponding pollen composition information of the allergy-causing plant stored locally based on the identity information of the allergy-causing plant, and searches for a composition matching with the pollen composition information of the allergy-causing plant from the acquired air composition information of the target detection region. Herein, the matching of the composition and the pollen composition information may be determined according to the chemical composition, or according to the particle diameter. Afterwards, it may be judged, according to the search result, whether an allergy-causing plant in the blooming state is existent in the target detection region. If it is judged that the target detection region contains an allergy-causing plant and the allergy-causing plant is in the blooming state, the background server may send an air purification request to the air purification device, to control the air purification device to enable the air purification function. Upon receiving the air purification request, the air purification device may enable the air purification function thereof to purify the air.

Optionally, the background server may control the air purification device to provide an environmental temperature and an environmental humidity suitable for the growth of a plant. The corresponding processing manner is as follows: determining at least one plant contained in a target detection region according to image of the target detection region and a prestored second reference plant image of various plants; and controlling a target air purification device to adjust the environmental temperature and the environmental humidity according to prestored growth temperature information and growth humidity information of the at least one plant.

The second reference plant image may be image of the plant stored in the background server, or may be image of the plant in the blooming state, or may be image of the plant in any state such as a non-blooming state and the like.

In some embodiments, the background server may store one or multiple pieces of image corresponding to identity information of each plant, and the image may be pictures of the plant in different states. In addition, the background server may prestore growth temperature information and growth humidity information of various plants, and correspondingly prestore identity information of the plants. The air purification device may be equipped with such functions as refrigeration, heating, humidification, dehumidification and the like.

Upon acquiring the image of the target detection region, the background server may perform regional division for the image with each strain of plant as a unit according to a predetermined plant image determination rule, for example, performing regional division according to such structures as stem, leaf, flower and the like of the plant, and determining image regions corresponding to all the plants contained in the above image. Hence the background server may perform matching-based judgment for the acquired image regions of the various plants and the prestored second reference plant image of the various plants, wherein a comparison may be made according to the appearances and profiles and color combinations of the plants. As illustrated in Fig. 5, when the appearances and profiles and the color combinations of the plants in the above two types of image both satisfy their respective predetermined similarities, it may be judged that the plant corresponding to the image region is the plant in the second reference plant image, and in this case, the identity information of the corresponding plant may be acquired.

The background server may inquire the prestored corresponding growth temperature information and growth humidity information of the plant according to the acquired identity information of the plant, and hence may acquire the growth temperature information and growth humidity information of all the plants in the target detection region, and then may determine a suitable temperature range and humidity range in the target detection region. The background server may send the suitable temperature range and humidity range in the target detection region to the air purification device, and according to the suitable temperature range and humidity range, the air purification device may adjust the environmental temperature and environmental humidity in the target detection region to the corresponding temperature range and humidity range based on such functions as refrigeration, heating, humidification, dehumidification and the like.

In the embodiment of the present disclosure, plant information of a plant contained in a target detection region is acquired, and a target air purification device is controlled to enable an air purification function thereof if it is judged, according to the plant information of the plant contained in the target detection region and predetermined reference plant information of the allergy-causing plant, that the target detection region contains the allergy-causing plant and the allergy-causing plant is in the blooming state. In this way, when the allergy-causing plant is blooming, the air purification device is capable of quickly detecting the blooming of the allergy-causing plant and clearing pollen in the air, thereby lowering the probability of adverse effects caused by the pollen.

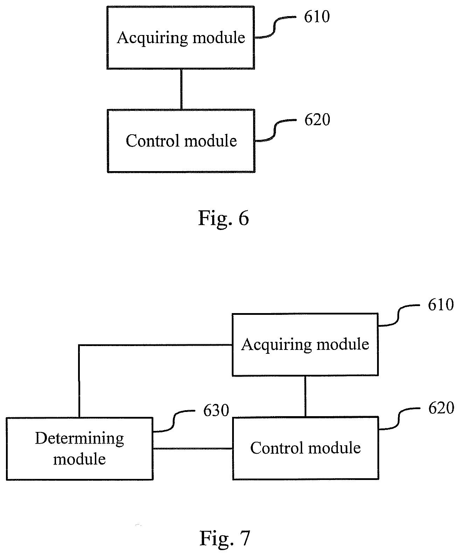

Based on the same technical concept, an embodiment of the present disclosure further provides an air purification apparatus. As illustrated in Fig. 6, the apparatus includes an acquiring module 610 and a control module 620.

The acquiring module 610 is configured to acquire plant information of a plant contained in a target detection region.

The control module 620 is configured to control a target air purification device to enable an air purification function if it is judged, according to the plant information of the plant contained in the target detection region and predetermined reference plant information of an allergy-causing plant, that the target detection region contains the allergy-causing plant and the allergy-causing plant is in a blooming state.

The acquiring module 610 is further configured to acquire image of the target detection region.

The control module 620 is further configured to control the target air purification device to enable the air purification function if it is judged, according to the image of the target detection region and predetermined first reference plant image of the allergy-causing plant, that the target detection region contains the allergy-causing plant and the allergy-causing plant is in the blooming state, wherein the first reference plant image is image of the allergy-causing plant in the blooming state.

Optionally, the acquiring module 610 is further configured to acquire the image of the target detection region captured by the target air purification device and/or another device via an image capturing component.

Optionally, as illustrated in Fig. 7, the apparatus further includes:
a determining module 630, configured to determine, according to the image of the target detection region and a prestored second reference plant image of various plants, at least one plant contained in the target detection region;
wherein the control module 620 is further configured to control the target air purification device to adjust an environmental temperature and an environmental humidity according to prestored growth temperature information and growth humidity information corresponding to the at least one plant.

The acquiring module 610 may be further configured to acquire air composition information of the target detection region; and the control module 620 may be further configured to control the target air purification device to enable the air purification function if it is judged, according to the air composition information of the target detection region and predetermined pollen composition information of the allergy-causing plant, that the air in the target detection region contains pollen of the allergy-causing plant.

With respect to the apparatuses in the above embodiments, the specific implementations of operations executed by various modules thereof have been described in detail in the embodiments illustrating the methods, which are not described herein any further.

In the embodiment of the present disclosure, plant information of a plant contained in a target detection region is acquired, and a target air purification device is controlled to enable an air purification function thereof if it is judged, according to the plant information of the plant contained in the target detection region and predetermined reference plant information of the allergy-causing plant, that the target detection region contains the allergy-causing plant and the allergy-causing plant is in the blooming state. In this way, when the allergy-causing plant is blooming, the air purification device is capable of quickly detecting the blooming of the allergy-causing plant and clearing pollen in the air, thereby lowering the probability of adverse effects caused by the pollen.

It should be noted that, during air purification by the air purification apparatuses according to the above embodiments, the apparatuses are described by only using division of the above functional modules as examples. In practice, the functions may be assigned to different functional modules for implementation as required. To be specific, the internal structure of the apparatus is divided into different functional modules to implement all or part of the above-described functions. In addition, the air purification apparatuses according to the above embodiments are based on the same inventive concept as the air purification methods according to the embodiments of the present disclosure. The specific implementation is elaborated in the method embodiments, which is not described herein any further.

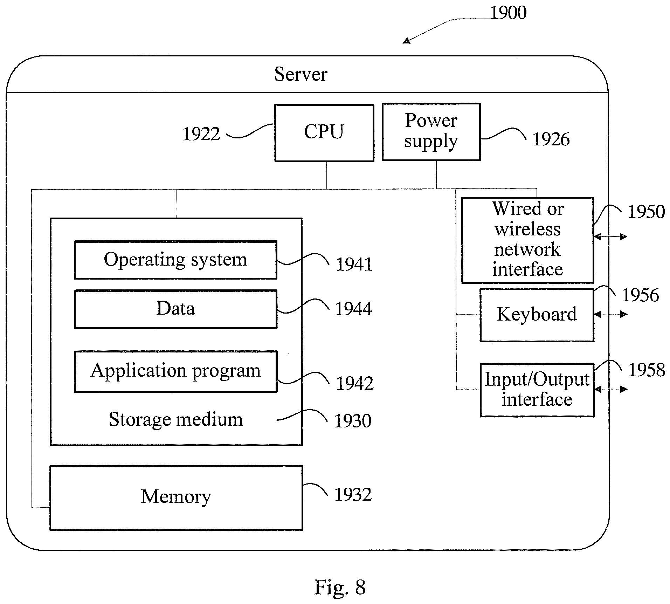

Fig. 8 is a block diagram illustrating an apparatus 1900 for use in air purification according to an example embodiment of the present disclosure. For example, the apparatus 1900 may be provided as a server. Referring to Fig. 8, the apparatus 1900 includes a processing component 1922, which further includes one or more processors and memory resources represented by a memory 1932, configured to store instructions executable by the processing component 1922, for example, applications. The applications stored in the memory 1932 may include one or more than one module each corresponding to a group of instructions. In addition, the processing component 1922 is configured to execute the instructions, to perform the above air purification methods.

The apparatus 1900 may further include: a power component 1926, configured to perform power management in the apparatus 1900; a wired or wireless network interface 1950, configured to connect the apparatus 1900 to the network; and an input/output (I/O) interface 1958. The apparatus 1900 may operate an operating system stored in the memory 1932, for example, Windows ServerTM, Mac OS XTM, UnixTM, LinuxTM, FreeBSDTM, or the like.

The apparatus 1900 may include a memory and at least one program, wherein at least one program is stored in the memory, and is configured to be run by at least one processor to execute instructions for performing the following operations:
acquiring plant information of a plant contained in a target detection region; and
controlling a target air purification device to enable an air purification function if it is judged, according to the plant information of the plant contained in the target detection region and predetermined reference plant information of an allergy-causing plant, that the target detection region contains the allergy-causing plant and the allergy-causing plant is in a blooming state, wherein
acquiring plant information of the plant contained in a target detection region includes: acquiring an image of the target detection region; and
controlling a target air purification device to enable an air purification function if it is judged, according to the plant information of the plant contained in the target detection region and predetermined reference plant information of an allergy-causing plant, that the target detection region contains the allergy-causing plant and the allergy-causing plant is in a blooming state includes:
   controlling the target air purification device to enable the air purification function if it is judged, according to the image of the target detection region and a predetermined first reference plant image of the allergy-causing plant, that the target detection region contains the allergy-causing plant and the allergy-causing plant is in the blooming state, wherein the first reference plant image is image of the allergy-causing plant in the blooming state.

Optionally, acquiring an image of the target detection region includes:
acquiring the image of the target detection region captured by the target air purification device and/or another device via an image capturing component.

Optionally, the method further includes:
determining, according to the image of the target detection region and a prestored second reference plant image of various plants, at least one plant contained in the target detection region; and
controlling the target air purification device to adjust an environmental temperature and an environmental humidity according to prestored growth temperature information and growth humidity information corresponding to the at least one plant.

In the embodiment of the present disclosure, plant information of a plant contained in a target detection region is acquired, and a target air purification device is controlled to enable an air purification function thereof if it is judged, according to the plant information of the plant contained in the target detection region and predetermined reference plant information of the allergy-causing plant, that the target detection region contains the allergy-causing plant and that the allergy-causing plant is in the blooming state. In this way, when the allergy-causing plant is blooming, the air purification device is capable of quickly detecting the blooming of the allergy-causing plant and clearing pollen in the air, thereby lowering the probability of adverse effects caused by the pollen.

It should be understood by those skilled in the art that the above described modules can each be implemented through hardware, or software, or a combination of hardware and software. One of ordinary skill in the art will also understand that multiple ones of the above described modules may be combined as one module, and each of the above described modules may be further divided into a plurality of sub-modules.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only, with a true scope of the present disclosure being solely defined by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. An air purification method, comprising:
acquiring (101) plant information of a plant contained in a target detection region; and
controlling (102) a target air purification device to enable an air purification function if it is judged, according to the plant information of the plant contained in the target detection region and predetermined reference plant information of an allergy-causing plant, that the target detection region contains the allergy-causing plant and that the allergy-causing plant is in a blooming state,
**characterized in that** acquiring (101) plant information comprises: acquiring an image of the target detection region; and
controlling (102) the target air purification device to enable an air purification function comprises:
controlling the target air purification device to enable the air purification function if it is judged, according to the image of the target detection region and a predetermined first reference plant image of the allergy-causing plant, that the target detection region contains the allergy-causing plant and that the allergy-causing plant is in the blooming state, wherein the first reference plant image is image of the allergy-causing plant in the blooming state.

2. The method according to claim 1, wherein acquiring an image of the target detection region comprises:
acquiring the image of the target detection region captured by the target air purification device and/or another device via an image capturing component.

3. The method according to claim 1, wherein the method further comprises:
determining, according to the image of the target detection region and a prestored second reference plant image of various plants, at least one plant contained in the target detection region; and
controlling the target air purification device to adjust an environmental temperature and an environmental humidity according to prestored growth temperature information and growth humidity information corresponding to the at least one plant.

4. An air purification apparatus, comprising:
an acquiring module (610), configured to acquire plant information of a plant contained in a target detection region; and
a control module (620), configured to control a target air purification device to enable an air purification function if it is judged, according to the plant information of the plant contained in the target detection region and predetermined reference plant information of an allergy-causing plant, that the target detection region contains the allergy-causing plant and that the allergy-causing plant is in a blooming state
**characterized in that** the acquiring module (610) is further configured to acquire image of the target detection region; and
the control module (620) is further configured to control the target air purification device to enable the air purification function if it is judged, according to the image of the target detection region and a predetermined first reference plant image of the allergy-causing plant, that the target detection region contains the allergy-causing plant and that the allergy-causing plant is in the blooming state, wherein the first reference plant image is image of the allergy-causing plant in the blooming state.

5. The apparatus according to claim 4, wherein the acquiring module (610) is further configured to acquire the image of the target detection region captured by the target air purification device and/or another device via an image capturing component.

6. The apparatus according to claim 4, wherein the apparatus further comprises:
a determining module (630), configured to determine, according to the image of the target detection region and a prestored second reference plant image of various plants, at least one plant contained in the target detection region; and
the control module (620) is further configured to control the target air purification device to adjust an environmental temperature and an environmental humidity according to prestored growth temperature information and growth humidity information corresponding to the at least one plant.

7. An air purification apparatus, comprising:
a processor (1922); and
a memory (1932) for storing instructions executable by the processor (1922);
wherein the processor (1922) is configured to:
acquire plant information of a plant contained in a target detection region; and
control a target air purification device to enable an air purification function if it is judged, according to the plant information of the plant contained in the target detection region and predetermined reference plant information of an allergy-causing plant, that the target detection region contains the allergy-causing plant and that the allergy-causing plant is in a blooming state
**characterized in that** acquiring plant information comprises: acquiring an image of the target detection region; and
controlling the target air purification device to enable an air purification function comprises:
controlling the target air purification device to enable the air purification function if it is judged, according to the image of the target detection region and a predetermined first reference plant image of the allergy-causing plant, that the target detection region contains the allergy-causing plant and that the allergy-causing plant is in the blooming state, wherein the first reference plant image is image of the allergy-causing plant in the blooming state.

8. A computer program including instructions for executing the steps of a method according to any one of claims 1 to 3 when said program is executed by a computer.

9. A recording medium readable by a computer and having recorded thereon a computer program instructions for executing the steps of a method according to any one of claims 1 to 3.

## Patentansprüche

1. Luftreinigungsverfahren, umfassend:
Erfassen (101) von Pflanzeninformationen einer Pflanze, die in einer Zieldetektionsregion enthalten ist, und
Steuern (102) einer Zielluftreinigungseinrichtung, um eine Luftreinigungsfunktion zu ermöglichen, wenn gemäß den Pflanzeninformationen der in der Zieldetektionsregion enthaltenen Pflanze und vorbestimmten Bezugspflanzeninformationen einer allergieverursachenden Pflanze beurteilt wird, dass die Zieldetektionsregion die allergieverursachende Pflanze enthält und dass die allergieverursachende Pflanze sich in einem Blütezustand befindet,
**dadurch gekennzeichnet, dass**
das Erfassen (101) von Pflanzeninformationen Erfassen eines Bildes der Zieldetektionsregion umfasst und
das Steuern (102) der Zielluftreinigungseinrichtung, um eine Luftreinigungsfunktion zu ermöglichen, Steuern der Zielluftreinigungseinrichtung umfasst, um die Luftreinigungsfunktion zu ermöglichen, wenn gemäß dem Bild der Zieldetektionsregion und einem vorbestimmten ersten Bezugspflanzenbild der allergieverursachenden Pflanze beurteilt wird, dass die Zieldetektionsregion die allergieverursachende Pflanze enthält und dass die allergieverursachende Pflanze sich in dem Blütezustand befindet, wobei das erste Bezugspflanzenbild ein Bild der allergieverursachenden Pflanze in dem Blütezustand ist.

2. Verfahren nach Anspruch 1, wobei das Erfassen eines Bildes der Zieldetektionsregion umfasst:
Erfassen des Bildes der Zieldetektionsregion, das von der Zielluftreinigungseinrichtung und/oder einer anderen Einrichtung über eine Bildaufnahmekomponente aufgenommen wird.

3. Verfahren nach Anspruch 1, wobei das Verfahren ferner umfasst:
gemäß dem Bild der Zieldetektionsregion und einem vorgespeicherten zweiten Bezugspflanzenbild von verschiedenen Pflanzen, Bestimmen von mindestens einer Pflanze, die in der Zieldetektionsregion enthalten ist, und
Steuern der Zielluftreinigungseinrichtung zum Anpassen einer Umgebungstemperatur und einer Umgebungsfeuchtigkeit gemäß vorgespeicherten Wachstumstemperaturinformationen und Wachstumsfeuchtigkeitsinformationen, die der mindestens einen Pflanze entsprechen.

4. Luftreinigungsvorrichtung, umfassend:
ein Erfassungsmodul (610), das dazu ausgestaltet ist, Pflanzeninformationen einer in einer Zieldetektionsregion enthaltenen Pflanze zu erfassen, und
ein Steuermodul (620), das dazu ausgestaltet ist, eine Zielluftreinigungseinrichtung zu steuern, um eine Luftreinigungsfunktion zu ermöglichen, wenn gemäß den Pflanzeninformationen der in der Zieldetektionsregion enthaltenen Pflanze und vorbestimmten Bezugspflanzeninformationen einer allergieverursachenden Pflanze beurteilt wird, dass die Zieldetektionsregion die allergieverursachende Pflanze enthält und dass die allergieverursachende Pflanze sich in einem Blütezustand befindet,
**dadurch gekennzeichnet, dass**
das Erfassungsmodul (610) ferner dazu ausgestaltet ist, ein Bild der Zieldetektionsregion zu erfassen und
das Steuermodul (620) ferner dazu ausgestaltet ist, die Zielluftreinigungseinrichtung zu steuern, um die Luftreinigungsfunktion zu ermöglichen, wenn gemäß dem Bild der Zieldetektionsregion und einem vorbestimmten ersten Bezugspflanzenbild der allergieverursachenden Pflanze beurteilt wird, dass die Zieldetektionsregion die allergieverursachende Pflanze enthält und dass die allergieverursachende Pflanze sich in dem Blütezustand befindet, wobei das erste Bezugspflanzenbild ein Bild der allergieverursachenden Pflanze in dem Blütezustand ist.

5. Vorrichtung nach Anspruch 4, wobei das Erfassungsmodul (610) ferner dazu ausgestaltet ist, das Bild der Zieldetektionsregion zu erfassen, das von der Zielluftreinigungseinrichtung und/oder einer anderen Einrichtung über eine Bildaufnahmekomponente aufgenommen wird.

6. Vorrichtung nach Anspruch 4, wobei die Vorrichtung ferner umfasst:
ein Bestimmungsmodul (630), das dazu ausgestaltet ist, gemäß dem Bild der Zieldetektionsregion und einem vorgespeicherten zweiten Bezugspflanzenbild von verschiedenen Pflanzen mindestens eine Pflanze zu bestimmen, die in der Zieldetektionsregion enthalten ist, und
das Steuermodul (620) ferner dazu ausgestaltet ist, die Zielluftreinigungseinrichtung zu steuern, um eine Umgebungstemperatur und eine Umgebungsfeuchtigkeit gemäß vorgespeicherten Wachstumstemperaturinformationen und Wachstumsfeuchtigkeitsinformationen anzupassen, die der mindestens einen Pflanze entsprechen.

7. Luftreinigungsvorrichtung, umfassend:
einen Prozessor (1922) und
einen Speicher (1932) zum Speichern von Anweisungen, die von dem Prozessor (1922) ausgeführt werden können,
wobei der Prozessor (1922) ausgestaltet ist zum:
Erfassen von Pflanzeninformationen einer in einer Zieldetektionsregion enthaltenen Pflanze und
Steuern einer Zielluftreinigungseinrichtung, um eine Luftreinigungsfunktion zu ermöglichen, wenn gemäß den Pflanzeninformationen der in der Zieldetektionsregion enthaltenen Pflanze und vorbestimmten Bezugspflanzeninformationen einer allergieverursachenden Pflanze beurteilt wird, dass die Zieldetektionsregion die allergieverursachende Pflanze enthält und dass die allergieverursachende Pflanze sich in einem Blütezustand befindet,
**dadurch gekennzeichnet, dass**
das Erfassen von Pflanzeninformationen Erfassen eines Bildes der Zieldetektionsregion umfasst und
das Steuern der Zielluftreinigungseinrichtung, um eine Luftreinigungsfunktion zu ermöglichen, Steuern der Zielluftreinigungseinrichtung umfasst, um die Luftreinigungsfunktion zu ermöglichen, wenn gemäß dem Bild der Zieldetektionsregion und einem vorbestimmten ersten Bezugspflanzenbild der allergieverursachenden Pflanze beurteilt wird, dass die Zieldetektionsregion die allergieverursachende Pflanze enthält und dass die allergieverursachende Pflanze sich in dem Blütezustand befindet, wobei das erste Bezugspflanzenbild ein Bild der allergieverursachenden Pflanze in dem Blütezustand ist.

8. Computerprogramm, das Anweisungen zum Ausführen der Schritte eines Verfahrens nach einem der Ansprüche 1 bis 3 beinhaltet, wenn das Programm von einem Computer ausgeführt wird.

9. Aufzeichnungsmedium, das von einem Computer gelesen werden kann und auf dem Computerprogrammanweisungen zum Ausführen der Schritte eines Verfahrens nach einem der Ansprüche 1 bis 3 aufgezeichnet sind.

## Revendications

1. Procédé de purification d'air, comprenant :
l'acquisition (101) d'informations de plante d'une plante contenue dans une région de détection cible ; et
la commande (102) d'un dispositif de purification d'air cible pour autoriser une fonction de purification d'air s'il est jugé, conformément aux informations de plante de la plante contenue dans la région de détection cible et à des informations de plante de référence prédéterminées d'une plante provoquant une allergie, que la région de détection cible contient la plante provoquant une allergie et que la plante provoquant une allergie est dans un état de floraison,
**caractérisé en ce que** l'acquisition (101) d'informations de plante comprend : l'acquisition d'une image de la région de détection cible ; et
la commande (102) du dispositif de purification d'air cible pour autoriser une fonction de purification d'air comprend :
la commande du dispositif de purification d'air cible pour autoriser la fonction de purification d'air s'il est jugé, conformément à l'image de la région de détection cible et à une première image de plante de référence prédéterminée de la plante provoquant une allergie, que la région de détection cible contient la plante provoquant une allergie et que la plante provoquant une allergie est dans l'état de floraison, dans lequel la première image de plante de référence est une image de la plante provoquant une allergie dans l'état de floraison.

2. Procédé selon la revendication 1, dans lequel l'acquisition d'une image de la région de détection cible comprend :
l'acquisition de l'image de la région de détection cible capturée par le dispositif de purification d'air cible et/ou un autre dispositif par l'intermédiaire d'un composant de capture d'image.

3. Procédé selon la revendication 1, dans lequel le procédé comprend en outre :
la détermination, conformément à l'image de la région de détection cible et à une deuxième image de plante de référence mémorisée au préalable de diverses plantes, d'au moins une plante contenue dans la région de détection cible ; et
la commande du dispositif de purification d'air cible pour ajuster une température ambiante et une humidité ambiante conformément à des informations de température de croissance et à des informations d'humidité de croissance mémorisées au préalable correspondant à ladite au moins une plante.

4. Appareil de purification d'air, comprenant :
un module d'acquisition (610), configuré pour acquérir des informations de plante d'une plante contenue dans une région de détection cible ; et
un module de commande (620), configuré pour commander un dispositif de purification d'air cible pour autoriser une fonction de purification d'air s'il est jugé, conformément aux informations de plante de la plante contenue dans la région de détection cible et à des informations de plante de référence prédéterminées d'une plante provoquant une allergie, que la région de détection cible contient la plante provoquant une allergie et que la plante provoquant une allergie est dans un état de floraison,
**caractérisé en ce que** le module d'acquisition (610) est en outre configuré pour acquérir une image de la région de détection cible ; et
le module de commande (620) est en outre configuré pour commander le dispositif de purification d'air cible pour autoriser la fonction de purification d'air s'il est jugé, conformément à l'image de la région de détection cible et à une première image de plante de référence prédéterminée de la plante provoquant une allergie, que la région de détection cible contient la plante provoquant une allergie et que la plante provoquant une allergie est dans l'état de floraison, dans lequel la première image de plante de référence est une image de la plante provoquant une allergie dans l'état de floraison.

5. Appareil selon la revendication 4, dans lequel le module d'acquisition (610) est en outre configuré pour acquérir l'image de la région de détection cible capturée par le dispositif de purification d'air cible et/ou un autre dispositif par l'intermédiaire d'un composant de capture d'image.

6. Appareil selon la revendication 4, dans lequel l'appareil comprend en outre :
un module de détermination (630), configuré pour déterminer, conformément à l'image de la région de détection cible et à une deuxième image de plante de référence mémorisée au préalable de diverses plantes, au moins une plante contenue dans la région de détection cible ; et
le module de commande (620) est en outre configuré pour commander le dispositif de purification d'air cible pour ajuster une température ambiante et une humidité ambiante conformément à des informations de température de croissance et à des informations d'humidité de croissance mémorisées au préalable correspondant à ladite au moins une plante.

7. Appareil de purification d'air, comprenant :
un processeur (1922) ; et
une mémoire (1932) pour mémoriser des instructions exécutables par le processeur (1922) ;
dans lequel le processeur (1922) est configuré pour :
acquérir des informations de plante d'une plante contenue dans une région de détection cible ; et
commander un dispositif de purification d'air cible pour autoriser une fonction de purification d'air s'il est jugé, conformément aux informations de plante de la plante contenue dans la région de détection cible et à des informations de plante de référence prédéterminées d'une plante provoquant une allergie, que la région de détection cible contient la plante provoquant une allergie et que la plante provoquant une allergie est dans un état de floraison,
**caractérisé en ce que** l'acquisition d'informations de plante comprend : l'acquisition d'une image de la région de détection cible ; et
la commande du dispositif de purification d'air cible pour autoriser une fonction de purification d'air comprend :
la commande du dispositif de purification d'air cible pour autoriser la fonction de purification d'air s'il est jugé, conformément à l'image de la région de détection cible et à une première image de plante de référence prédéterminée de la plante provoquant une allergie, que la région de détection cible contient la plante provoquant une allergie et que la plante provoquant une allergie est dans l'état de floraison, dans lequel la première image de plante de référence est une image de la plante provoquant une allergie dans l'état de floraison.

8. Programme d'ordinateur comprenant des instructions pour exécuter les étapes d'un procédé selon l'une quelconque des revendications 1 à 3 lorsque ledit programme est exécuté par un ordinateur.

9. Support d'enregistrement pouvant être lu par un ordinateur et sur lequel sont enregistrées des instructions de programme d'ordinateur pour exécuter les étapes d'un procédé selon l'une quelconque des revendications 1 à 3.
